# EUROPEAN PATENT SPECIFICATION

(11) **EP 2 868 177 B1**
(45) Date of publication and mention of the grant of the patent: **21.10.2015**
(21) Application number: 13191583.7
(22) Date of filing: 05.11.2013
(51) Int. Cl.: A01B 21/04, A01B 29/04, A01B 49/02

(54) **Harrow apparatus & method**
Eggenvorrichtung und Verfahren
Herse et procédé

(43) Date of publication of application: 06.05.2015
(73) Proprietor: Kverneland Group Les Landes Génusson, 85130 Les Landes Génusson (FR); Kverneland Group Deutschland GmbH, 59494 Soest (DE)
(72) Inventor: Haselhorst, Dominik, 59556 Lippstadt (DE); Kath-Petersen, Wolfgang, 51789 Lindlar (DE)
(74) Representative: Morris, Jonathan Paul

(56) References cited:
- EP-A2- 0 305 056
- DE-A1-102008 059 144
- US-A- 2 588 585
- US-A1- 2008 142 233
- US-B1- 6 554 078
- US-B1- 8 020 629

## Description

The present invention relates to harrow apparatus and a method for harrowing.

A harrow is a tool that is used by farmers for breaking up and smoothing out surface soil. A harrow is typically used to prepare a field for seeding. For example, a harrow may be used to break up clods, remove weeds and to breakdown any thatch remaining in the field. Essentially a harrow is used to provide a finer finish.

Farmers are particularly interested in plant residues management, that is, the way in which plant residues that are left over from other agronomic processes such as harvesting are dealt with. For example, some combine harvesters are known for their uneven harvesting. In some instances such combines only spread straw across 60-70% of the total working width, and therefore leave behind stalks, such as straw stalks, which can be quite stiff and difficult to remove. Natural biological processes that breakdown such untreated plant residues can take a long time, which can effect later agronomic processes. It is desirable for farmers to have some process for removing these stalks, or to at least to help break down their structure so that the natural decomposition process can be speeded up.

A problem with current harrowing apparatus is the working depth. If the working depth of a harrow is too great the soil can dry out, the soil can be more easily eroded and there can be a reduction in the natural biological activity, which breaks down plant residues. When using conventional harrowing apparatus, farmers typically follow the conventional wisdom that the more plant residues (like straw) there are remaining on the field, the deeper they need to cultivate the soil in order to mix it with a lot of soil; the theory being that the greater the depth the greater the speed of decomposition. However, a cultivating process of this type is not beneficial from an agronomic point of view as, to decompose a lot of residues a lot of biologic activity is needed in the soil. It has been found that the deeper the soil is cultivated, the more biologic activity is destroyed, which in turn has a negative effect regarding the decomposition process.

During the harrowing process, seeds can be deposited onto/into the soil from the plant residues. A further problem with working the soil too deeply is that seeds for some plants require a shallow covering of soil in order to germinate. If the working depth is too high, too much soil can be laid over the seeds thereby preventing them from germinating.

An example of a harrow is disclosed in DE 10 2008 059 144 A1. That document discloses a harrow, which has the following arrangement from front to rear (in the driving direction): i) one row of disc harrows; ii) multiple rows of finger harrows; and iii) at least one roller for compacting the earth. The apparatus is for cutting and aligning straw lying on the ground to enable residue rotting and to release grain lost by combine harvesters for germination processes.

A drawback with the harrow of DE 10 2008 059 144 A1 is that it includes disc harrows. The disc harrows provide a minimum working depth of around 5 cm. This depth is considered to be too high to prevent soil erosion effects and to prevent soil from drying-out in at least some situations. Furthermore, the relatively large working depth can have a negative effect on the decomposing biologic activity. A further problem with the arrangement is that when the disc harrows penetrate the soil they loosen the straw sufficiently such that when the roller traverses the soil it cannot apply very much pressure to the straw. The effect of this is to push the straw into the soil rather than undertaking a cutting and/or cracking effect. The cutting and/or cracking effect is important to help physically breakdown the straw to assist biological decomposition. For the sake of brevity the cutting and/or cracking effect is referred to in the specification as "cutting".

Accordingly the present invention seeks to provide harrow apparatus and a method for harrowing that mitigates at least one of the aforementioned problems, or at least provides an alternative to existing apparatus and methods.

Agricultural apparatus is disclosed in US8020629, US6554078, US2008/0142233, US2588585, and EP0305056.

According to one aspect of the invention there is provided harrow apparatus according to claim 1. The apparatus consists of a frame, a leading rotor section including at least one rotor rotatably attached to the frame, said rotor being arranged to cut plant residues in a field, a tine section including a plurality of tines, said tines being arranged to till soil in the field and distribute plant residues cut by the leading rotor section, and a trailing rotor section.

It is to be noted that the rotor of the current invention provides a different function to the disc harrows described in DE 10 2008 059 144. Disc harrows are substantially circular blades, which are oriented in the direction of travel of the harrow. The disc harrows cut relatively deeply into the soil and form channels which are oriented in the direction of travel. The or each rotor in the current invention cuts transversely. The or each rotor is arranged such that it does not substantially cut into the soil, but rather cuts plant residues at or above the surface of the soil. Thus the harrow apparatus according to the invention provides a transverse cutting action, followed by alignment and longitudinal cut affected by the tine harrows. The tine harrows also mix and level the plant residues, place grain loss from combine harvesters in contact with the soil for germination, and destroy weeds, thereby preventing their regrowth.

The leading rotor section and the tine section are arranged with respect to the frame such that the leading rotor section precedes the tine section when the harrow is moved in its normal operational direction.

The trailing rotor section includes at least one rotor rotatably attached to the frame, said rotor being arranged to cut plant residues in the field. The or each rotor in the trailing rotor section is arranged such that it does not substantially cut into the soil, but rather cuts plant residues at or above the surface of the soil. The trailing rotor section provides a second transverse cut of the plant residues and a slight packing force to facilitate the germination of seeds and their regrowth. This significantly improves the overall cutting effect of the harrow.

The trailing rotor section is arranged with respect to the frame such that the tine section precedes the trailing rotor section when the harrow is moved in its normal operational direction. Thus the leading rotor section, tine section and trailing rotor section are arranged sequentially with respect to the frame. The leading rotor section is located forward most, followed by the tine section and subsequently the trailing rotor section.

The or each rotor includes at least one, and preferably a plurality of blades, that is oriented transversely to the direction of travel of the harrow apparatus. That is, each blade has a longitudinal axis and the longitudinal axes of the blades are arranged substantially perpendicularly to the direction of travel of the harrow apparatus in normal use.

Advantageously the rotor is typically substantially cylindrical in form. The blades are preferably evenly distributed about the periphery of the rotor. The blades are preferably metallic, for example can include steel. The blades are typically formed from rectangular strips of steel, and preferably have a sharp edge.

Advantageously at least some of the blades can be substantially rectilinear, or at least include a substantially rectilinear part.

Advantageously at least some of the blades can be substantially curvilinear, for example can have a helical form, or at least include a substantially curvilinear/helical part. For example, the helical blade may be formed by twisting substantially rectangular strips of steel to form the desired blade profile. Using at least one rotor having substantially helical blades is desirable since the helically formed blades reduce operational vibrations.

Advantageously the blades can be arranged substantially parallel to one another. Advantageously the blades can be arranged substantially parallel with a central longitudinal axis of the rotor. Advantageously the blades can run along substantially the full length of the rotor.

Advantageously at least one of the rotors can include openings between adjacent blades. This provides the rotor with a substantially open periphery, which assists with removal of plant residues. Alternatively the space between adjacent blades can be filled by a connecting surface, thereby providing a substantially closed peripheral surface.

Advantageously at least some of the blades can include cutting teeth. This provides a substantially serrated cutting edge for each blade that includes teeth.

Advantageously at least one of the rotors comprises a space frame arrangement. This provides a light weight structure.

Advantageously at least one of the rotors can include a plurality of annular blade support members. The blades are mounted in the peripheries of each of the annular support members. Advantageously the position of at least one, and preferably each, of the rotors is adjustable with respect to the frame.

Advantageously at least one, and preferably each, of the rotors is attached to the frame via a mounting assembly, wherein the orientation of the mounting assembly is adjustable with respect to the frame. For example, at least one, and preferably each, of the rotors is attached to the frame via a mounting assembly, which is arranged to pivot with respect to the frame. This enables the height setting of the rotor to be adjusted with respect to the frame and/or the working pressure of the rotor to be adjusted.

Advantageously at least one of the rotors can be pivotally attached to the frame via at least one pivoting parallelogram assembly. The mounting assembly includes a transverse beam which is arranged to support at least one rotor. The position of the transverse beam with respect to the frame is adjustable by adjusting the orientation of the or each parallelogram assembly with respect to the frame.

The apparatus can include at least one locking mechanism for fixing the position of at least one of the rotors with respect to the frame. Preferably each rotor that is movable with respect to the frame has its own locking mechanism for locking its position with respect to the frame. For example, a locking mechanism can be provided for locking the position of the or each parallelogram assembly.

Advantageously at least one of the rotors can include a plurality of rotor segments, which rotate about a common axis of rotation. Typically, the rotor segments are mounted on a common axle. The rotor segments can each be arranged to rotate relative the axle, or alternatively can be fixed to the axle and the axle can be arranged to rotate relative to a mounting assembly, which attaches the rotor to the frame. Segmented rotors reduce cutting vibration. They also ensure a close contour of the soil surface.

Advantageously the leading rotor section can include a plurality of rotors. The plurality of rotors can be arranged sequentially such that a first rotor precedes a second rotor in the direction of travel of the harrow apparatus. Additionally, or alternatively, the plurality of rotors can be arranged substantially coaxially thereby extending the width of the harrow apparatus. In preferred embodiments, the leading rotor section includes a single rotor. Advantageously the trailing rotor section can include a plurality of rotors. The plurality of rotors can be arranged sequentially such that a first rotor precedes a second rotor in the direction of travel of the harrow apparatus. Additionally, or alternatively, the plurality of rotors can be arranged substantially coaxially thereby extending the width of the harrow apparatus. In preferred embodiments, the trailing rotor section includes four rotors, typically in the form of a first pair of substantially coaxially arranged rotors, and a second pair of coaxially arranged rotors. The second pair is arranged sequentially with the first pair; said first pair preceding the second pair. The first pair of rotors typically comprises rotors having an open periphery with helical blades. The second pair of rotors typically comprises rotors having a plurality of rotor segments distributed along a common axis.

Advantageously the trailing rotor section can be attached to the frame via a bogie system. Advantageously the bogie system can include a plurality of bogies attached to the frame. Each bogie includes at least one rotor and preferably a pair of rotors.

Advantageously the angle of at least some of the tines is adjustable with respect to the frame. This enables the soil working depth to be adjusted. The apparatus is preferably used to work the soil to a shallow working depth, typically less than 3cm and preferably between 1 and 2cm. However there may be some applications where a greater depth is required, such as up to 8cm, and therefore the length of the tines, and the full range of adjustment is selected to enable the tines to work the soil at the required depths. The working depth can be selected to best suit the working conditions, for example the soil type, humidity of the residues and/or the quantity of residues.

Advantageously the apparatus can include at least one tine adjustment mechanism for adjusting the angle of at least some of the tines with respect to the frame. This sets the soil working depth.

Advantageously the tine section includes a first row of tines, said tines being mounted on a first transverse mounting member, such as a first beam. Typically the tines are mounted on the first transverse mounting member in a spaced arrangement. Typically the spacing between adjacent tines is substantially uniform.

Advantageously the tine section includes a second row of tines, said tines being mounted on a second transverse mounting member, such as a second beam. Typically the tines are mounted on the first transverse mounting member in a spaced arrangement. Typically the spacing between adjacent tines is substantially uniform.

Advantageously the tines on the first row can be transversely offset from the tines on the second row. That is, the tines on the second row are preferably not aligned with the tines on the first row in the direction of travel of the harrow apparatus. For example, the first row can include 7 tines and the second row can include 8 tines, wherein each tine in the first row is positioned approximately halfway between a pair of tines on the second row when viewed from a front or rear end of the harrow apparatus. Alternatively, each tine in the second row can be arranged substantially in line with a tine on the first row.

The number of tines on a row has an influence on the distribution of plant residues on the field. If the number of tines is too low, the distribution of residues is uneven. If the number of tines is too high, blockage of plant residues between tines can occur. The strength of the tines can also impact the way in which the tines work the soil.

Advantageously the apparatus can include a first tine adjustment mechanism for adjusting the angle of the first row of tines with respect to the frame. The tines can be fixed to the first beam. The first tine adjustment mechanism is arranged to rotate the first beam thereby adjusting the angle of the first row of tines with respect to the frame.

Advantageously the first tine adjustment mechanism can be arranged to adjust the angle of the second row of tines with respect to the frame. Thus a single adjustment mechanism can be used to simultaneously adjust the angle of both the first and second rows of tines with respect to the frame.

Advantageously the apparatus can include a second tine adjustment mechanism for adjusting the angle of the second row of tines with respect to the frame. The tines can be fixed to the second beam. The second tine adjustment mechanism is arranged to rotate the second beam thereby adjusting the angle of the second row of tines with respect to the frame. Thus the angle of the second row of tines with respect to the frame can be adjusted independently of the first row of tines.

Advantageously at least some of the tines, and preferably each of the tines, are releasably attachable to their transverse mounting members such that the transverse positions of those tines with respect to the frame are adjustable. For example, this provides the farmer with the option of selecting the tines in the first row being substantially in line with tines in the second row or the tines in the first row being offset from the tines in the second row.

Advantageously the tine section can include at least one additional row of tines. In preferred embodiments, the harrow apparatus includes four rows of tines. Each additional row of tines is mounted on a respective transverse member, such as a transverse beams. Each additional row of tines can be arranged similarly to the first or second row of tines.

Advantageously the tine section can include at least one additional tine adjustment mechanism for adjusting the angle of at least one additional row of tines with respect to the frame.

The apparatus can include at least one connector for attaching the harrow to a tractor unit.

Advantageously the apparatus can include at least one foldable side section. This is useful where the working width exceeds 3m, to enable the harrow apparatus to be transported by road.

According to another aspect of the invention there is provided a method for harrowing, including providing harrow apparatus according to any configuration described herein, and cutting plant residues at or above the soil surface using the leading and trailing rotor sections and tiling soil with the plurality of tines.

Advantageously the method can include the average working depth of the tines is less than or equal to 3 cm, and preferably around 1 to 2cm. This can be achieved, for example by adjusting the angle of the tines with respect to the frame.

An embodiment of the present invention will now be described, by way of example only, with reference to the accompanying drawings in which:
Figure 1 is an isometric view of harrow apparatus in accordance with an embodiment of the invention;
Figure 2 is a side view of the apparatus of Figure 1;
Figure 3 is a plan view from below of the apparatus of Figure 1;
Figure 4 is a plan view from above of the apparatus of Figure 1; and
Figure 5 is a diagrammatic side view of the apparatus of Figure 1, illustrating the apparatus in use and its effect on a field.

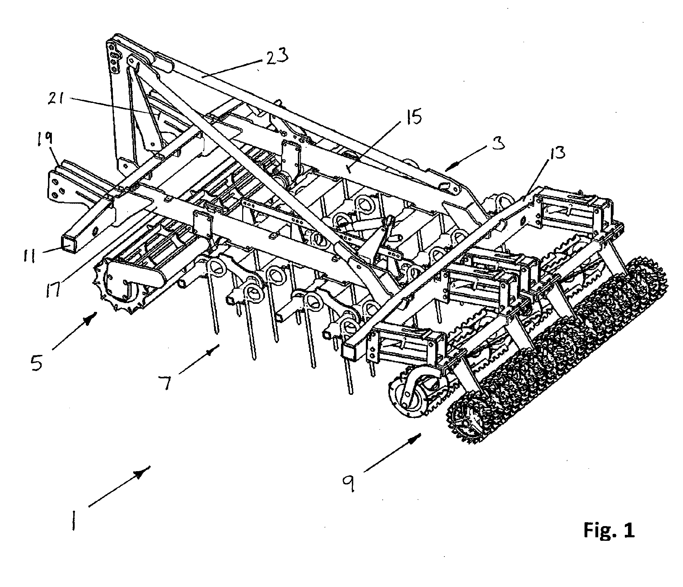

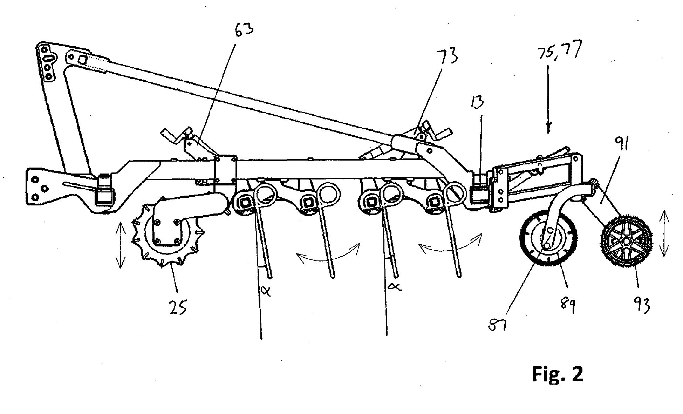

Figures 1 to 5 show a harrow 1 in accordance with the invention. The harrow 1 includes a frame 3; a leading rotor section 5; a tine section 7; and a trailing rotor section 9.

The frame 3 includes first and second transverse beams 11,13, and first and second longitudinal beams 15,17. The first transverse beam 11 is located towards the front of the harrow 1 (the front being defined by the direction of travel of the harrow 1), that is, is arranged substantially perpendicularly to the direction of travel of the harrow. The second transverse beam 13 is located towards the rear of the harrow and is arranged substantially parallel to the first transverse beam 11. The first and second longitudinal beams 15,17 connect the first transverse beam 11 to the second transverse beam 13. The first and second longitudinal beams 15,17 are arranged substantially perpendicularly to the first and second transverse beams 11,13. The first longitudinal beam 15 is arranged substantially parallel to the second longitudinal beam 17. The longitudinal axes of the first and second longitudinal beams 15,17 are substantially aligned with the direction of travel of the harrow. The beams 11,13,15,17 lie substantially in the same plane. The plane is approximately horizontal when the harrow 1 is in use.

The frame 3 incudes first and second towing connectors 19,21 for coupling the harrow 1 to a tractor unit (not shown). The tractor unit pulls the harrow 1 across the field to be treated.

The frame 3 includes an upper support assembly 23 for providing additional support to the frame 3.

The leading rotor section 5 includes a rotor 25 and mounting assembly 27 for attaching the rotor 25 to the frame 3. The purpose of the rotor 25 is to provide a transverse cutting effect to the plant residues.

The mounting assembly 27 includes first and second support arms 29,31 and a cylindrical beam 33. The cylindrical beam 33 is attached to the frame 3 via first and second brackets 35,37, which enables the mounting assembly 27 to be pivotally adjustable with respect to the frame 3. This enables the height of the rotor 25 to be adjusted with respect to the frame 3, and/or enables the working pressure of the roller 25 to be adjusted.

A locking mechanism 39 is provided to lock the position of the rotor 25 with respect to the frame 3.

The leading rotor 25 is pivotally attached to the mounting assembly 27 between the first and second support arms 29,31. The rotor 25 is arranged for free rotational movement with respect to the first and second support arms 29,31. The rotor 25 has a longitudinal axis that is arranged substantially perpendicular to the direction of travel and substantially parallel with the first transverse beam 11. The rotor 25 can have an open or closed periphery (an open arrangement is shown in the figures). The rotor 25 includes several blades 41 and five annular blade support members 43 distributed along the length of the rotor 25. The blades 41 are mounted in the peripheries of the annular support members 43, and are angularly spaced in a sustainably uniform manner. Thus the rotor 25 has a space frame arrangement.

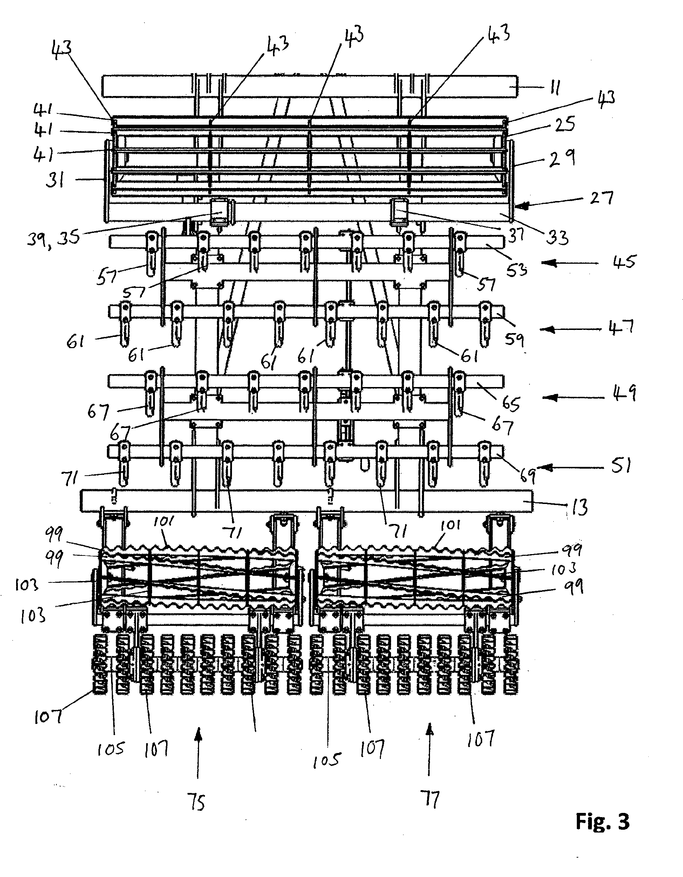

Each blade extends substantially the full length of the rotor 25. Each blade 41 is arranged substantially parallel with the longitudinal axis of the rotor 25. Alternatively, each blade can be inclined to the longitudinal axis, or helically arranged, for example in a similar manner to the trailing rotor section 9 (see Figure 3).

The tine section 7 includes first, second, third and fourth rows of tines 45, 47, 49, 51.

The first row of tines 45 includes a first tine support beam 53, with seven tines 57 attached thereto. The tines 57, which are typically in the form of elongate steel rods, are distributed along the first tine support beam 53, with substantially uniform spacing. The second row of tines 47 includes a second tine support beam 59, with eight tines 61 mounted thereon. The tines 61 are distributed along the length of the support beam with substantially uniform spacing. It is apparent from Figures 1, 3 and 4, that the tines 61 in the second row are transversely offset from the tines 57 in the first row. Each tine 57 in the first row is arranged substantially equidistant between an associated pair of tines 61 on a second row.

A first tine adjustment mechanism 63 is mounted to the frame 3. The first tine adjustment mechanism 63 is arranged to adjust the angle of attack α of the tines 57,61 in the first and second rows of tines 45,47. This effectively changes the working depth of the tines 57,61. The first tine adjustment mechanism 63 can comprise any suitable type, for example may include a threaded member for adjusting the angle of attack, or a rack and pinion method.

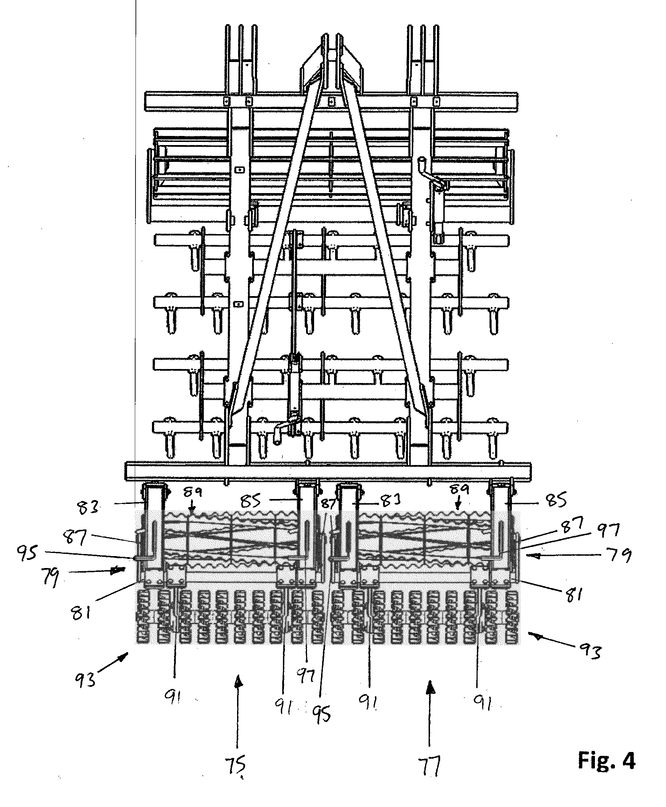

The third row of tines 49 includes a third tine support beam 65, and seven tines 67 distributed along the third tine support beam 65 in a uniform manner. The tines 67 are arranged along the tine support beam such that they are substantially aligned with the tines 57 in the first row (see Figures 3 and 4). The fourth row of tines 51 includes a fourth tine support beam 69, which includes eight tines 71 distributed substantially uniformly along the fourth tine support beam 69. The tines 71 are arranged substantially in line with the tines 61 in the second row of tines 47. Similarly to the first and second rows 45,47, the third and fourth tine support beams 65,69 are pivotally mounted with respect to the frame 3.

A second tine adjustment mechanism 73 is provided to adjust the angle of attack α of the tines 67,71 in the third and fourth rows. The second tine adjustment mechanism 73 is preferably similarly arranged to the first tine adjustment mechanism 63.

It will be appreciated by the skilled person that if further degrees of freedom are required additional tine adjustment mechanisms can be provided in order to adjust the angle of attack of each of the rows of tines 45, 47, 49, 51 independently of the others. In preferred embodiments, the adjustment mechanisms 63,73, each adjust a plurality of rows of tines (typically two rows).

Having tine adjustment mechanisms 63,73 enables the angle α of the tines to be adjusted to suit the operational conditions, for example to take into account field conditions such as soil quality, humidity of the residues and/or the amount of residues.

Optionally, the tines 57,61,67,71 can be mounted on their respective support beams 53,59,65,69 in a manner that allows their axial position on the beam to be adjusted, for example by providing a number of locating positions on the beams, and/or screw connectors.

The trailing rotor section 9 includes first and second bogie-like trailer units 75,77. The first and second trailer units 75,77 are similar. The first trailer unit 75 will now be described, however the description is also applicable to the second trailer unit 77.

The first trailer unit 75, includes a mounting assembly 79 which includes a transverse beam 81, which is arranged substantially parallel with the second transverse beam 13. The unit 75 further includes first and second connector assemblies 83,85 which are arranged to connect the transverse beam 81 to the second transverse beam 13; a first pair of support arms 87 for supporting a first trailing rotor 89; and a second pair of support arms 91 for supporting a second trailing rotor 93.

The first and second connector assemblies 83,85 are arranged such that the position of the transverse beam 81 is adjustable with respect to the transverse beam 13. The first and second connector assemblies 83,85 are substantially in the form of a parallelogram type arrangement and each include a locking mechanism 95,97 thus the positions of the first and second trailing rotors 89,93 are adjustable with respect to the frame 3.

The first trailing rotor 89 is pivotally mounted between the first pair of support arms 87. The first trailing rotor 89 can include an open or closed surface (an open surface is shown in Figures 1, 3 and 4). It includes a longitudinal axis which is arranged substantially parallel with the transverse beam 81. The first trailing rotor 89 includes several blades 99 and several annular blade supports 103 distributed along the length of the rotor. The rotor 89 has a space frame arrangement. There are openings between each of the blades 99 and therefore the rotor 89 has an open periphery. However a rotor having a closed periphery can be used.

The blades extend along substantially the full length of the rotor 89. The blades are either substantially rectilinear and are inclined to the longitudinal axis of the rotor, or are helically arranged. The helical arrangement is preferred since this reduces operational vibrations.

Alternatively, the blades 99 can be arranged similarly to the blades 41 in the leading rotor 25.

Each of the blades 99 optionally includes a number of cutting teeth 101 formed along the length of the blades 99. This improves the cutting effect.

The second trailing rotor 93 includes an axle 105, which is supported by the second pair of support arms 91. The rotor 93 includes several rotor segments 107 that are mounted on the axle 105. The rotor segments 107 are substantially evenly distributed along the length of the axle 105. Each rotor segment 107 may be fixedly attached to the axle 105 and the axle is arranged to rotate with respect to the second pair of support arms 91. Alternatively, each of the rotor segments 107 can be rotatably mounted on the axle 105, and the axle can be fixed to the second pair of support arms 91. Each of the rotor segments 107 includes multiple cutting blades distributed around its outer surface. This type of rotor ensures a close contour to the soil.

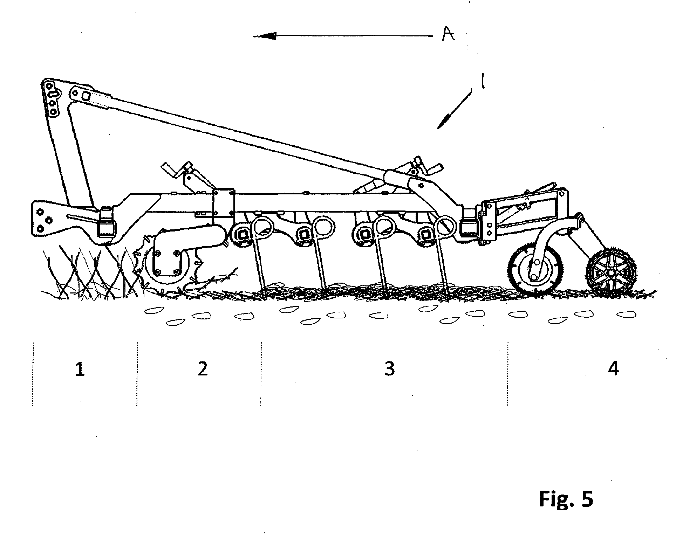

In use, the harrow 1 is attached to the rear of a tractor unit. The tractor unit pulls the harrow 1 across the field to be treated. This is illustrated in Figure 5. In section 1 of Figure 5, it can be seen that the field includes long plant residues such as straw stalks, which are left behind after a harvesting operation.

The harrow 1 is moved across the field in the direction of arrow A in Figure 5. Thus the leading rotor 25 cuts the plant residues (see section 2 of Figure 5). In some instances, the blades 41 cleanly cut through the plant residues and totally separate the part that protrudes above the soil from the root below. In other instances, the blades 41 pummel the plant residues, thereby cracking and breaking their structure however, the stalk may remain attached to a part of the residue below the ground and therefore is said to be cracked rather than cut. Residues already removed from the soil are pummelled by the rotor thereby cracking and breaking their structure.

The tines 57,61,67,71 are set at an angle of attack α, which provides a very shallow working depth in the soil. Typically the working depth is below 3cm and preferably around 1-2cm. The purpose of the tines is to work the soil and spread the plant residues that have been processed by the leading rotor 25 evenly across the soil without great disturbance of the soil (see section 3 of Figure 5). This brings any seeds remaining in the residues into contact with the soil and provides a light covering of soil over the seeds. The first and second trailing rotors 89,93 cut and crack again the plant residues, which significantly improves the overall harrowing effect. The trailing rotors 89,93 also have the effect of packing the seeds and residues in close contact with the soil to respectively accelerate germination and decomposition (see section 4 of Figure 5).

Thus the apparatus according to the invention provides:
a) a transverse cut from the leading rotor; followed by
b) working of the soil by the tine section which provides mixing and levelling action of the plant residues, bringing weed seed and grain into contact with the soil for germination, and destroying young plants of weed to prevent their regrowth; followed by
c) a transverse cut of plant residues by the trailing rotor section combined with a slight packing force to facilitate the germination of seeds and their regrowth

The advantages of the harrow 1 according to the invention are:
- The apparatus provides a solution that substantially evenly distributes plant residues on the field surface, which facilitates subsequent agronomic processes on the field such as other cultivation machines, seeders, etc. This is especially the case when, for example cereals are harvested with a combine harvester with wide headers. In this case, the straw splitting equipment of the combine harvester may not provide an even straw distribution.
- The apparatus provides a solution for removing seed dormancy of some plants for which a short light exposure is needed to germinate. The mixing effects of the different processing units ensure light exposure to these seeds.
- The apparatus provides a solution for accelerating residue degradation after crop harvesting without making use of deep working processes. In most cases with conventional machines, farmers follow the strategy that the more residues (like straw) are remaining on the fields, the deeper they cultivate the soil in order to mix it with enough soil to accelerate their decomposition. Such a cultivating process is not beneficial from an agronomic point of view as, to decompose a lot of residues a lot of biologic activity is needed in the soil. The deeper the soil is cultivated, the more biologic activity is destroyed and affected which has in turn a negative effect regarding the decomposition process. Also, a deep working process accelerates the drying-out of soil.

- As the residues are kept on the surface, soil erosion is significantly reduced. This is an important aspect in particular for countries where the legislation demands cultivating methods which avoid erosion processes. A further demand has been required by the European Union called "EU Cross Compliance Erosion Prevention Act".
- A further important aspect of the apparatus is the destruction of weeds. As roots of weeds are located near the surface a shallow processing is sufficient to destroy weeds. As the so called black grass (lat. Alopecurus myosuroides) has become a major problem during the cereal production, apparatus according to the invention is able to reduce the amount of this type of weed or to destroy it totally depending on the soil characteristics. At the same time the amount of herbicide can be significantly reduced or may not even be required.
- A shallow processing method has the further benefit that weed seeds which exist close to the ground are accessible for animals like insects, mice and birds to consume.
- Even if the cultivation process described above relates to harvested fields, the apparatus can also be used for ploughed land for weed control on winter furrows. This processing method results in a finer seedbed without raising wet soil on top.
- The apparatus can also be used for removing capping surface on a field, especially after seeding. This situation can occur in an unwanted way when heavy rain falls on a field where a seed bed preparation has been performed, especially in loamy soils.
- Since the apparatus works near to the surface of the soil it offers further economic and ecological advantages (a near surface cultivation means the working depth is around 1-3 cm, and most preferably between 1-2 cm). A near surface cultivation allows the farmer to use higher working speeds with the tractor combined with lower fuel consumption.

It will be apparent to the skilled person that modifications can be made to the above embodiment that falls within the scope of the invention, for example a plurality of rotors can be provided in the leading rotor section. Any practicable number of rotors can be used in the leading section.

Tine adjustment mechanisms can be provided for each row of tines, thereby enabling each row of times to be adjusted independently of the other rows.

The number of rotors in the trailing rotor section can be at least one. Any practicable number of rotors can be used.

Different types of rotors can be used, provided that they provide substantially the same cutting effect.

The number of rows of tines can be changed. Typically the apparatus includes at least one row of tines, and preferably a plurality of rows. Any practicable number of rows of tines can be used.

Any practicable number of tines can be included in each row of tines.

While the apparatus is designed to be pulled by a tractor unit, it is possible that the apparatus could form part of a dedicated harrowing vehicle.

For wide applications, it may be necessary to include support wheels. Also, wide applications can include a hinged frame. For example, at least one hinged side section of rotors and tines can be provided. This enables the or each hinged side section to be folded upwards for transport purposes.

## Claims

1. Harrow apparatus consisting of a frame (3), a leading rotor section (5) including at least one rotor (25) rotatably attached to the frame (3), wherein the or each rotor (25) includes at least one blade (41) that is oriented transversely to the direction of travel of the harrow apparatus and is arranged to cut plant residues at or above the surface of the soil; a tine section (7) including a plurality of tines (57,61,67,71), said tines (57,61,67,71) being arranged to till soil in the field and distribute plant residues cut by the leading rotor section (5); and a trailing rotor section (9), said trailing rotor section (9) including at least one rotor (89,93) rotatably attached to the frame (3), wherein the or each rotor (89,93) includes at least one blade (99) that is oriented transversely to the direction of travel of the harrow apparatus and is arranged to cut plant residues at or above the surface of the soil.

2. Apparatus according to claim 1, wherein the tine section (7) is arranged such that the average working depth of the tines (57,61,67,71) is less than or equal to 3 cm, and preferably around 1 to 2cm.

3. Apparatus according to claim 1 or 2, wherein at least some of the blades (41,99) are substantially rectilinear, or at least include a substantially rectilinear part, and are arranged substantially parallel to one another.

4. Apparatus according to any one of the preceding claims, wherein at least some of the blades (41,99) are substantially curvilinear, preferably in a helical form, or at least include a substantially curvilinear part.

5. Apparatus according to any one of the preceding, wherein at least one of the rotors (25,89,93) includes openings between adjacent blades (41,99).

6. Apparatus according to any one of the preceding, wherein at least some of the blades (41,99) include cutting teeth (101).

7. Apparatus according to any one of the preceding claims, wherein at least one of the rotors (25,89,93) comprises a space frame arrangement.

8. Apparatus according to any one of the preceding claims, wherein at least one of the rotors (25,89,93) includes a plurality of annular blade support members (43,103).

9. Apparatus according to any one of the preceding claims, wherein the position of at least one, and preferably each, of the rotors (25,89,93) is adjustable with respect to the frame (3).

10. Apparatus according to any one of the preceding claims, wherein at least one, and preferably each, of the rotors (25,89,93) is attached to the frame (3) via a mounting assembly (27,79), wherein the orientation of the mounting assembly (27,79) is adjustable with respect to the frame (3).

11. Apparatus according to claim 10, wherein at least one of the rotors (25,89,93) is pivotally attached to the frame (3) via at least one pivoting parallelogram assembly (83,85).

12. Apparatus according to any one of the preceding claims, including at least one locking mechanism (39) for fixing the position of at least one of the rotors (25,89,93) with respect to the frame (3).

13. Apparatus according to any one of the preceding claims, wherein at least one of the rotors (25,89,93) comprises a plurality of rotor segments (107), which rotate about a common axis of rotation.

14. Apparatus according to any one of the preceding claims, wherein the leading rotor section (5) includes a plurality of rotors (25).

15. Apparatus according to any one of the preceding claims, wherein the trailing rotor section (9) includes a plurality of rotors (89,93).

16. Apparatus according to any one of the preceding claims, wherein the angle (α) of at least some of the tines (57,61,67,71) is adjustable with respect to the frame (3).

17. Apparatus according to any one of the preceding claims, including at least one tine adjustment mechanism (63,73) for adjusting the angle (α) of at least some of the tines (57,61,67,71) with respect to the frame (3).

18. Apparatus according to any one of the preceding claims, wherein the tine section (7) includes a first row of tines (45), said tines (57) being mounted on a first transverse mounting member (53), such as a first beam.

19. Apparatus according to any one of the preceding claims, wherein the tine section includes a second row of tines (47), said tines (61) being mounted on a second transverse mounting member (59), such as a second beam.

20. Apparatus according to claim 19, wherein the tines (57) on the first row (45) are transversely offset from the tines (61) on the second row (47).

21. Apparatus according to claim 18, including a first tine adjustment mechanism (63) for adjusting the angle (α) of each of the tines (57) in the first row of tines (45) with respect to the frame (3).

22. Apparatus according to claim 21 when dependent on claim 19, wherein the first tine adjustment mechanism (63) is arranged to adjust the angle (α) of each of the tines (61) in the second row of tines (47) with respect to the frame (3).

23. Apparatus according to claim 19, including a second tine adjustment mechanism for adjusting the angle (α) of each of the tines (61) in the second row of tines (47) with respect to the frame (3).

24. Apparatus according to any one of the preceding claims, wherein at least some of the tines (57,61,67,71), and preferably each of the tines (57,61,67,71), are releasably attachable to their transverse mounting members (53,59,65,69) such that the transverse positions of those tines (57,61,67,71) with respect to the frame (3) are adjustable.

25. Apparatus according to any one of the preceding claims 19-24, wherein the tine section (7) includes at least one additional row of tines (49,51).

26. Apparatus according to claim 25, wherein the tine section (7) includes at least one additional tine adjustment mechanism (73) for adjusting the angle (α) of each of the tines (67,71) in the additional row of tines (49,51) with respect to the frame (3).

27. Apparatus according to any one of the preceding claims, including at least one connector (19,21) for attaching the harrow to a tractor unit.

28. Apparatus according to any one of the preceding claims, wherein the trailing rotor section (9) is attached to the frame (3) via a bogie system (75,77).

29. Apparatus according to any one of the preceding claims, including at least one foldable side section.

30. A method for harrowing, including providing harrow apparatus according to any one of the preceding claims, **characterised by** cutting plant residues at or above the soil surface without substantially cutting into the soil using the leading and trailing rotor sections (5,9) and tiling soil with the plurality of tines (57,61,67,71).

31. A method according to claim 30, wherein the average working depth of the tines (57,61,67,71) is less than or equal to 3 cm, and preferably around 1 to 2cm.

## Patentansprüche

1. Eggvorrichtung, bestehend aus einem Rahmen (3), einem vorderen Rotorabschnitt (5), der mindestens einen Rotor (25) umfasst, der drehbar am Rahmen (3) befestigt ist, wobei der oder jeder Rotor (25) mindestens ein Messer (41) umfasst, das quer zur Bewegungsrichtung der Eggvorrichtung ausgerichtet und so ausgelegt ist, dass es Pflanzenrückstände an oder über der Oberfläche des Bodens abschneidet; einem Zackenabschnitt (7), der eine Mehrzahl von Zacken (57, 61, 67, 71) umfasst, wobei die Zacken (57, 61, 67, 71) so ausgelegt sind, dass sie den Boden im Feld pflügen und vom vorderen Rotorabschnitt (5) abgeschnittene Pflanzenrückstände verteilen; und einem hinteren Rotorabschnitt (9), wobei der hintere Rotorabschnitt (9) mindestens einen Rotor (89, 93) umfasst, der drehbar am Rahmen (3) befestigt ist, wobei der oder jeder Rotor (89, 93) mindestens ein Messer (99) umfasst, das quer zur Bewegungsrichtung der Eggvorrichtung ausgerichtet und so ausgelegt ist, dass es Pflanzenrückstände an oder über der Oberfläche des Bodens abschneidet.

2. Vorrichtung nach Anspruch 1, wobei der Zackenabschnitt (7) derart ausgelegt ist, dass die mittlere Arbeitstiefe der Zacken (57, 61, 67, 71) weniger als oder gleich wie 3 cm und vorzugsweise etwa 1 bis 2 cm ist.

3. Vorrichtung nach Anspruch 1 oder 2, wobei wenigstens einige der Messer (41, 99) im Wesentlichen geradlinig sind oder wenigstens einen im Wesentlichen geradlinigen Teil umfassen und im Wesentlichen parallel zueinander angeordnet sind.

4. Vorrichtung nach einem der vorhergehenden Ansprüche, wobei wenigstens einige der Messer (41, 99) im Wesentlichen krummlinig, vorzugsweise spiralförmig, sind oder wenigstens einen im Wesentlichen krummlinigen Teil umfassen.

5. Vorrichtung nach einem der vorhergehenden Ansprüche, wobei mindestens einer der Rotoren (25, 89, 93) Öffnungen zwischen benachbarten Messern (41, 99) umfasst.

6. Vorrichtung nach einem der vorhergehenden Ansprüche, wobei wenigstens einige der Messer (41, 99) Schneidzähne (101) umfassen.

7. Vorrichtung nach einem der vorhergehenden Ansprüche, wobei mindestens einer der Rotoren (25, 89, 93) eine räumliche Rahmenanordnung umfasst.

8. Vorrichtung nach einem der vorhergehenden Ansprüche, wobei mindestens einer der Rotoren (25, 89, 93) eine Mehrzahl von ringförmigen Messerträgerelementen (43, 103) umfasst.

9. Vorrichtung nach einem der vorhergehenden Ansprüche, wobei die Position mindestens eines und vorzugsweise jedes der Rotoren (25, 89, 93) in Bezug auf den Rahmen (3) verstellbar ist.

10. Vorrichtung nach einem der vorhergehenden Ansprüche, wobei mindestens einer und vorzugsweise jeder der Rotoren (25, 89, 93) über eine Befestigungseinheit (27, 79) am Rahmen (3) befestigt ist, wobei die Ausrichtung der Befestigungseinheit (27, 79) in Bezug auf den Rahmen (3) verstellbar ist.

11. Vorrichtung nach einem der vorhergehenden Ansprüche, wobei mindestens einer der Rotoren (25, 89, 93) über mindestens eine drehgelenkige Parallelogrammeinheit (83, 85) drehbar am Rahmen (3) befestigt ist.

12. Vorrichtung nach einem der vorhergehenden Ansprüche, umfassend mindestens einen Verriegelungsmechanismus (39) zum Fixieren der Position mindestens eines der Rotoren (25, 89, 93) in Bezug auf den Rahmen (3).

13. Vorrichtung nach einem der vorhergehenden Ansprüche, wobei mindestens einer der Rotoren (25, 89, 93) eine Mehrzahl von Rotorsegmenten (107) umfasst, die sich um eine gemeinsame Drehachse drehen.

14. Vorrichtung nach einem der vorhergehenden Ansprüche, wobei der vordere Rotorabschnitt (5) eine Mehrzahl von Rotoren (25) umfasst.

15. Vorrichtung nach einem der vorhergehenden Ansprüche, wobei der hintere Rotorabschnitt (9) eine Mehrzahl von Rotoren (89, 93) umfasst.

16. Vorrichtung nach einem der vorhergehenden Ansprüche, wobei der Winkel (α) wenigstens einiger der Zacken (57, 61, 67, 71) in Bezug auf den Rahmen (3) verstellbar ist.

17. Vorrichtung nach einem der vorhergehenden Ansprüche, umfassend mindestens einen Zackeneinstellmechanismus (63, 73) zum Einstellen des Winkels (α) mindestens einiger der Zacken (57, 61, 67, 71) in Bezug auf den Rahmen (3).

18. Vorrichtung nach einem der vorhergehenden Ansprüche, wobei der Zackenabschnitt (7) eine erste Reihe von Zacken (45) umfasst, wobei die Zacken (57) auf einem ersten quer verlaufenden Befestigungselement (53), wie beispielsweise einem ersten Balken, montiert sind.

19. Vorrichtung nach einem der vorhergehenden Ansprüche, wobei der Zackenabschnitt eine zweite Reihe von Zacken (47) umfasst, wobei die Zacken (61) auf einem zweiten quer verlaufenden Befestigungselement (59), wie beispielsweise einem zweiten Balken, montiert sind.

20. Vorrichtung nach Anspruch 19, wobei die Zacken (57) auf der ersten Reihe (45) von den Zacken (61) auf der zweiten Reihe (47) quer versetzt sind.

21. Vorrichtung nach Anspruch 18, umfassend einen ersten Zackeneinstellmechanismus (63) zum Einstellen des Winkels (α) einer jeden der Zacken (57) in der ersten Reihe von Zacken (45) in Bezug auf den Rahmen (3).

22. Vorrichtung nach Anspruch 21, wenn abhängig von Anspruch 19, wobei der erste Zackeneinstellmechanismus (63) zum Einstellen des Winkels (α) einer jeden der Zacken (61) in der zweiten Reihe von Zacken (47) in Bezug auf den Rahmen (3) ausgelegt ist.

23. Vorrichtung nach Anspruch 19, umfassend einen zweiten Zackeneinstellmechanismus zum Einstellen des Winkels (α) einer jeden der Zacken (61) in der zweiten Reihe von Zacken (47) in Bezug auf den Rahmen (3).

24. Vorrichtung nach einem der vorhergehenden Ansprüche, wobei wenigstens einige der Zacken (57, 61, 67, 71) und vorzugsweise jede der Zacken (57, 61, 67, 71) lösbar an ihren quer verlaufenden Befestigungselementen (53, 59, 65, 69) befestigt werden können, derart dass die Querposition dieser Zacken (57, 61, 67, 71) in Bezug auf den Rahmen (3) verstellbar sind.

25. Vorrichtung nach einem der Ansprüche 19 bis 24, wobei der Zackenabschnitt (7) mindestens eine zusätzliche Reihe von Zacken (49, 51) umfasst.

26. Vorrichtung nach Anspruch 25, wobei der Zackenabschnitt (7) mindestens einen zusätzlichen Zackeneinstellmechanismus (73) zum Einstellen des Winkels (α) einer jeden der Zacken (67, 71) in der zusätzlichen Reihe von Zacken (49, 51) in Bezug auf den Rahmen (3) umfasst.

27. Vorrichtung nach einem der vorhergehenden Ansprüche, umfassend mindestens einen Verbinder (19, 21) zum Anhängen der Egge an eine Zugmaschineneinheit.

28. Vorrichtung nach einem der vorhergehenden Ansprüche, wobei der hintere Rotorabschnitt (9) über ein Drehgestellsystem (75, 77) am Rahmen (3) befestigt ist.

29. Vorrichtung nach einem der vorhergehenden Ansprüche, umfassend mindestens einen faltbaren Seitenabschnitt.

30. Eggverfahren, umfassend ein Bereitstellen einer Eggvorrichtung nach einem der vorhergehenden Ansprüche, **gekennzeichnet durch** Abschneiden von Pflanzenrückständen an oder über der Bodenoberfläche ohne wesentliches Schneiden in den Boden unter Verwendung der vorderen und hinteren Rotorabschnitte (5, 9) und Pflügen des Bodens mit der Mehrzahl von Zacken (57, 61, 67, 71).

31. Verfahren nach Anspruch 30, wobei die mittlere Arbeitstiefe der Zacken (57, 61, 67, 71) weniger als oder gleich wie 3 cm und vorzugsweise etwa 1 bis 2 cm ist.

## Revendications

1. Appareil formant herse composé d'un châssis (3), d'une partie rotor avant (5) comprenant au moins un rotor (25) fixé rotatif au châssis (3), **caractérisé en ce que** le ou chaque rotor (5) comprend au moins une lame (41) qui est orientée transversalement au sens de déplacement de l'appareil formant herse et qui est conçue pour couper des résidus végétaux à la surface du sol ou au-dessus de celle-ci ; une partie à dents (7) comprenant une pluralité de dents (57, 61, 67, 71), lesdites dents (57, 61, 67, 71) étant conçues pour labourer le sol dans le champ et répartir des résidus végétaux coupés par la partie rotor avant (5) ; et une partie rotor arrière (9), ladite partie rotor arrière (9) comprenant au moins un rotor (89, 93) fixé rotatif au châssis (3), dans lequel le ou chaque rotor (89, 93) comprend au moins une lame (99) qui est orientée transversalement au sens de déplacement de l'appareil formant herse et qui est conçue pour couper des résidus végétaux à la surface du sol ou au-dessus de celle-ci.

2. Appareil selon la revendication 1, **caractérisé en ce que** la partie à dents (7) est conçue de manière que la profondeur moyenne de travail des dents (57, 61, 67, 71) soit inférieure ou égale à 3 cm, et de préférence d'environ 1 à 2 cm.

3. Appareil selon la revendication 1 ou 2, **caractérisé en ce qu'**au moins quelques-unes des lames (41, 99) sont sensiblement rectilignes, ou pour le moins comprennent une partie sensiblement rectiligne, et sont disposées de façon sensiblement parallèle les unes aux autres.

4. Appareil selon l'une quelconque des revendications précédentes, **caractérisé en ce qu'**au moins quelques-unes des lames (41, 99) sont sensiblement curvilignes, de préférence en une forme hélicoïdale, ou pour le moins comprennent une partie sensiblement curviligne.

5. Appareil selon l'une quelconque des revendications précédentes, **caractérisé en ce qu'**au moins l'un des rotors (25, 89, 93) présente des ouvertures entres des lames voisines (41, 99).

6. Appareil selon l'une quelconque des revendications précédentes, **caractérisé en ce qu'**au moins quelques-unes des lames (41, 99) comprennent des dents coupantes (101).

7. Appareil selon l'une quelconque des revendications précédentes, **caractérisé en ce qu'**au moins l'un des rotors (25, 89, 93) présente un agencement de structure tridimensionnelle.

8. Appareil selon l'une quelconque des revendications précédentes, **caractérisé en ce qu'**au moins l'un des rotors (25, 89, 93) comprend une pluralité d'éléments annulaires de support de lames (43, 103).

9. Appareil selon l'une quelconque des revendications précédentes, **caractérisé en ce que** la position d'au moins l'un, et de préférence de chacun, des rotors (25, 89, 93) est réglable par rapport au châssis (3).

10. Appareil selon l'une quelconque des revendications précédentes, **caractérisé en ce qu'**au moins l'un, et de préférence chacun, des rotors (25, 89, 93) est fixé au châssis (3) par l'intermédiaire d'un assemblage de montage (27, 79), dans lequel l'orientation de l'assemblage de montage (27, 79) est réglable par rapport au châssis (3).

11. Appareil selon la revendication 10, **caractérisé en ce qu'**au moins l'un des rotors (25, 89, 93) est fixé pivotant au châssis (3) par l'intermédiaire d'au moins un assemblage pivotant en forme de parallélogramme (83, 85).

12. Appareil selon l'une quelconque des revendications précédentes, comprenant au moins un mécanisme de verrouillage (39) destiné à fixer la position d'au moins l'un des rotors (25, 89, 93) par rapport au châssis (3).

13. Appareil selon l'une quelconque des revendications précédentes, **caractérisé en ce qu'**au moins l'un des rotors (25, 89, 93) comprend une pluralité de segments de rotor (107) qui tournent autour d'un axe de rotation commun.

14. Appareil selon l'une quelconque des revendications précédentes, **caractérisé en ce que** la partie rotor avant (5) comprend une pluralité de rotors (25).

15. Appareil selon l'une quelconque des revendications précédentes, **caractérisé en ce que** la partie rotor arrière (9) comprend une pluralité de rotors (89, 93).

16. Appareil selon l'une quelconque des revendications précédentes, **caractérisé en ce que** l'angle (α) d'au moins quelques-unes des dents (57, 61, 67, 71) est réglable par rapport au châssis (3).

17. Appareil selon l'une quelconque des revendications précédentes, comprenant au moins un mécanisme de réglage de dents (63, 73) destiné à régler l'angle (α) d'au moins quelques-unes des dents (57, 61, 67, 71) par rapport au châssis (3).

18. Appareil selon l'une quelconque des revendications précédentes, **caractérisé en ce que** la partie à dents (7) comprend une première rangée de dents (45), lesdites dents (57) étant montées sur un premier élément de montage transversal (53), tel qu'une première poutre.

19. Appareil selon l'une quelconque des revendications précédentes, **caractérisé en ce que** la partie à dents comprend une seconde rangée de dents (47), lesdites dents (61) étant montées sur un second élément de montage transversal (59), tel qu'une seconde poutre.

20. Appareil selon la revendication 19, **caractérisé en ce que** les dents (57) de la première rangée (45) sont décalées transversalement par rapport aux dents (61) de la seconde rangée (47).

21. Appareil selon la revendication 18, comprenant un premier mécanisme de réglage de dents (63) destiné à régler l'angle (α) de chacune des dents (57) de la première rangée de dents (45) par rapport au châssis (3).

22. Appareil selon la revendication 21, lorsqu'elle est dépendante de la revendication 19, **caractérisé en ce que** le premier mécanisme de réglage de dents (63) est conçu pour régler l'angle (α) de chacune des dents (61) de la seconde rangée de dents (47) par rapport au châssis (3).

23. Appareil selon la revendication 19, comprenant un second mécanisme de réglage de dents destiné à régler l'angle (α) de chacune des dents (61) de la seconde rangée de dents (47) par rapport au châssis (3).

24. Appareil selon l'une quelconque des revendications précédentes, **caractérisé en ce qu'**au moins quelques-unes des dents (57, 61, 67, 71), et de préférence chacune des dents (57, 61, 67, 71), peuvent ou peut être fixée(s) amovible(s) à leur ou à son élément de montage transversal (53, 59, 65, 69), de manière que les positions transversales de ces dents (57, 61, 67, 71) par rapport au châssis (3) soient réglables.

25. Appareil selon l'une quelconque des revendications 19 à 24, **caractérisé en ce que** la partie à dents (7) comprend au moins une rangée de dents supplémentaire (49, 51).

26. Appareil selon la revendication 25, **caractérisé en ce que** la partie à dents (7) comprend au moins un mécanisme de réglage de dents supplémentaire (73) destiné à régler l'angle (α) de chacune des dents (67, 71) de la rangée de dents supplémentaire (49, 51) par rapport au châssis (3).

27. Appareil selon l'une quelconque des revendications précédentes, comprenant au moins un raccord (19, 21) destiné à fixer la herse à un engin tracteur.

28. Appareil selon l'une quelconque des revendications précédentes, **caractérisé en ce que** la partie rotor arrière (9) est fixée au châssis (3) par le biais d'un système de bogies (75, 77).

29. Appareil selon l'une quelconque des revendications précédentes, comprenant au moins une partie latérale pliable.

30. Procédé de hersage, comprenant l'utilisation d'un appareil formant herse selon l'une quelconque des revendications précédentes, **caractérisé par** la coupe de résidus végétaux à la surface du sol ou au-dessus de celle-ci, sensiblement sans coupe dans le sol à l'aide des parties rotors avant et arrière (5, 9) et le labourage du sol avec la pluralité de dents (57, 61, 67, 71).

31. Procédé selon la revendication 30, **caractérisé en ce que** la profondeur moyenne de travail des dents (57, 61, 67, 71) est inférieure ou égale à 3 cm, et de préférence d'environ 1 à 2 cm.
